# EUROPÄISCHE PATENTSCHRIFT

(11) **EP 3 753 079 B1**
(45) Veröffentlichungstag und Bekanntmachung des Hinweises auf die Patenterteilung: **17.08.2022**
(21) Anmeldenummer: 19720555.2
(22) Anmeldetag: 26.04.2019
(51) Int. Cl.: H02G 15/007, H02G 3/06

(54) **KABELMONTAGEBAUTEIL UND ELEKTROGERÄT**
CABLE MOUNTING COMPONENT AND ELECTRICAL APPLIANCE
COMPOSANT DE MONTAGE DE CÂBLE ET APPAREIL ÉLECTRIQUE

(30) Priorität: 27.04.2018 DE 102018206602
(43) Veröffentlichungstag der Anmeldung: 23.12.2020
(73) Patentinhaber: De'Longhi Braun Household GmbH, 63263 Neu-Isenburg (DE)
(72) Erfinder: DEXHEIMER, Christian, 63225 Langen (DE)
(74) Vertreter: Hoffmann Eitle
(86) Internationale Anmeldenummer: PCT/EP2019/060784
(87) Internationale Veröffentlichungsnummer: WO 2019/207127

(56) Entgegenhaltungen:
- EP-A1- 0 908 975
- EP-A2- 1 737 074
- EP-B1- 1 737 074

## Beschreibung

### Technisches Gebiet

Die Erfindung betrifft ein Kabelmontagebauteil für ein Elektrogerät, insbesondere ein handgehaltenes Haushaltsgerät, wie einen Stabmixer. Ferner betrifft die Erfindung ein Elektrogerät und ein Verfahren zum Anbringen eines Kabelelements an einem Elektrogerät.

### Stand der Technik

Elektrogeräte, wie ein kabelgebundener Stabmixer, weisen üblicherweise eine Zugentlastung auf, um den Anschluss des Kabelelements am Elektrogerät vor Belastungen zu schützen. Vor der Markteinführung wird ein solches Elektrogerät einer Zugprüfung unterzogen, um auszuschließen, dass innerhalb eines bestimmten Normbereichs ein Defekt am Anschluss des Kabelelements auftritt.

Üblicherweise werden Elektrogeräte, wie der genannte Stabmixer, für verschiedene Länder und Märkte konzipiert. Je nach Anforderungen im entsprechenden Markt unterscheiden sich die Kabelelemente, insbesondere die Kabelummantelung und somit der Kabelquerschnitt/Kabeldurchmesser.

Bekannte Zugentlastungen sind dabei üblicherweise auf einen bestimmten Kabeltyp, insbesondere einen bestimmten Kabeldurchmesser, angepasst, sodass es nicht möglich ist, eine bestimmte Zugentlastung für einen anderen Kabeltyp mit anderem Kabeldurchmesser zu verwenden.

Um eine Vielzahl von unterschiedlich dimensionierten Zugentlastungen für die entsprechenden Kabeldurchmesser zu vermeiden, ist es deshalb üblich, ein Kabelelement zwischen zwei relativ zueinander bewegbaren Zugentlastungsteilen anzuordnen und das Kabelelement zwischen diesen Zugentlastungsteilen anzuordnen. Mittels einer Schraube werden die Zugentlastungsteile anschließend aufeinander zu bewegt und somit das Kabel geklemmt, sodass durch eine größere Anzahl von Umdrehungen beim Einschrauben der Schraube auch Kabelelemente mit geringerem Durchmesser fixiert werden können.

Die DE 94 12 042 U1 betrifft eine universelle Kabelklemmvorrichtung. Die Klemmvorrichtung umfasst einen Satz von vier Klemmbacken, welche annähernd in einer gemeinsamen radialen Ebene um den Mantel des jeweils zu verklemmenden Kabels legbar sind, und die jeweils zumindest an einer Außenseite eine radial auf den Mantel des Kabels gerichtete Riffelung aufweisen. Ferner umfasst die Klemmvorrichtung mindestens eine annähernd quer zum jeweils zu verklemmenden Kabel verlaufende Mulde, wobei zumindest eine der annähernd quer zum Kabel verlaufenden Längsinnenseiten der zumindest einen Mulde eine Riffelung aufweist, in die die Klemmbacken über die jeweils geriffelte Außenseite derart einschiebbar sind, dass eine radial auf den Kabelmantel einwirkende Klemmkraft entsteht.

Das Dokument EP 1 737 074 A2 betrifft eine Verbindungseinrichtung, die mit einem Gehäuseelement verbunden das, das eine Vielzahl von Anschlüssen trägt.

Ein weiterer Verbinder ist aus der EP 0 908 975 A1 bekannt.

### Gegenstand der Erfindung

Die Erfindung zielt darauf ab, ein kostengünstiges Kabelmontagebauteil bereitzustellen, das bei variierenden Kabeldurchmessern flexibel einsetzbar ist.

Der Gegenstand des Anspruchs 1 stellt ein entsprechendes Kabelmontagebauteil bereit. Weitere bevorzugte Ausführungsformen sind in den abhängigen Ansprüchen aufgeführt und/oder nachfolgend beschrieben. Ferner betrifft die Erfindung ein Elektrogerät und ein Verfahren zur Montage eines Kabelelements an einem Elektrogerät.

Erfindungsgemäß wird ein Kabelmontagebauteil für ein Elektrogerät mit den Merkmalen gemäß Anspruch 1 bereitgestellt.

Das erfindungsgemäße Kabelmontagebauteil hat den Vorteil, dass dieses neben einem Kabelhalter ein Kabelträgerelement umfasst. Das Kabelträgerelement kann in unterschiedlichen Dimensionen gefertigt werden, so dass das für den konkreten Anwendungsfall einzusetzende Kabelträgerelement bei der Montage des Kabelelements ausgewählt werden kann. Der Kabelhalter kann für die gesamte Baureihe verwendet werden. Auf diese Weise wird eine variierbare und flexible Zugentlastung bereitgestellt.

Ferner hat das Kabelmontagebauteil den Vorteil, dass der Einsatz einer Schraube zum Fixieren des Kabelelements entfällt, wobei optional auch zusätzlich eine Schraube eingesetzt werden kann. Somit wird der Montageaufwand reduziert.

Ferner ist es vorgesehen, dass das Kabelträgerelement an der Aufnahmeseite ein erstes Eingriffselement zum Eingriff an einen Kabelmantel eines Kabelelements vorgesehen ist. Somit kann das Kabelelement an der Aufnahmeseite des Kabelträgerelements gehalten werden. Bevorzugt erstreckt sich das erste Eingriffselement quer zur Längsrichtung des Kabelelements. Das das Kabelträgerelementkörper ist beim Aufbringen einer Zugbelastung derart deformierbar, dass das erste Eingriffselement in den Kabelmantel des Kabelelements eingedrückt wird.

Gemäß einer bevorzugten Ausführungsform ist es vorgesehen, dass das Kabelträgerelement oder der Kabelhalter, oder beide, als Spritzgussteil gefertigt ist/sind. Somit ist das Kabelmontagebauteil relativ kostengünstig herstellbar.

In einer Variante ist es vorgesehen, dass das Kabelträgerelement ein Halteelement aufweist, das zur Aufnahmeseite des Kabelträgerelements derart beabstandet angeordnet ist, dass ein Kabelelement zwischen der Aufnahmeseite und dem Halteelement aufgenommen werden kann. Somit kann das Kabelelement an der Aufnahmeseite des Kabelträgerelements gehalten werden. Demnach ist es möglich, das Kabelelement am Kabelträgerelement vorzumontieren, bevor dieses am Kabelhalter angebracht wird. Das Haltelement kann insbesondere als ein flaches Bauteil ausgebildet sein.

Dabei kann an der zur Aufnahmeseite weisenden Seite ein zweites Eingriffselement vorgesehen sein, um das Kabelelement zusätzlich zu halten.

Es ist bevorzugt, dass das Halteelement einseitig mittels eines Stützabschnitts mit dem Kabelträgerelementkörper verbunden ist. Somit kann das Kabelelement seitlich zwischen das Halteelement und die Aufnahmeseite eingeschoben werden.

Gemäß einer Ausführungsform ist es vorgesehen, dass am Kabelträgerelementkörper ein erster Verbindungssteg und ein zweiter Verbindungssteg vorgesehen sind, die in entgegengesetzten Richtungen vom Kabelträgerelementkörper hervorstehen. In diesem Zusammenhang kann es vorgesehen sein, dass die Verbindungsstege jeweils mit der Führung des Kabelhalters in Kontakt bringbar sind. Somit kann der Kabelträgerelementkörper sicher am Kabelhalter aufgenommen werden.

In einer weiteren Variante weist das Kabelträgerelement zumindest einen Schraubdom auf.

Dabei ist es bevorzugt, dass das Kabelträgerelement einen ersten Schraubdom und einen zweiten Schraubdom aufweist, die an entgegengesetzten Seiten des Kabelträgerelementkörpers angeordnet sind. Diese kommen bevorzugt mit einer zusätzlichen Kabelbrücke zum Einsatz. Zur Fixierung können selbstfurchende Schrauben verwendet werden, die jeweils in den ersten und zweiten Schraubdom eingeschraubt werden. Sollte sich während des Produktionsprozesses eine Kabelspezifikation ändern, kann ein solches Kabel unter Einsatz einer Kabelbrücke dennoch verbaut werden.

Gemäß einer weiteren Ausführungsform ist es vorgesehen, dass der Schraubdom eine Bohrung aufweist. Wenn das Kabelträgerelement zwei Schraubdome aufweist, so ist es bevorzugt, dass der erste Schraubdom eine erste Bohrung und der zweite Schraubdom eine zweite Bohrung aufweist. In die Bohrung bzw. die Bohrungen kann eine selbstschneidende Schraube eingeführt werden, so dass das Einschrauben und die Zentrierung der Schraube am Schraubdom erleichtert wird.

Der Kabelhalter kann als Führung einen ersten Führungsabschnitt und einen zweiten Führungsabschnitt aufweisen, entlang derer das Kabelträgerelement bewegbar ist. Insbesondere kann das Kabelträgerelement in den Kabelhalter eingeschoben werden. Die Führungsabschnitte können schienenartig ausgebildet sein, so dass ein entsprechender Abschnitt des Kabelträgerelements in den Führungsabschnitten aufgenommen werden kann.

Es ist bevorzugt, dass die Führung des Kabelhalters zwischen einem Trägerabschnitt und einem Rückabschnitt des Kabelhalters vorgesehen ist, so dass das Kabelträgerelement zum Anbringen des Kabelelements zumindest teilweise in den Kabelhalter einschiebbar ist. Somit kann das Kabelträgerelement im Kabelhalter aufgenommen werden.

Gemäß einer weiteren Ausführungsform umfasst das zuvor genannte Kabelmontagebauteil ein Kabelelement. Es ist bevorzugt, dass das Kabelelement um den Kabelträgerelementkörper geschlungen ist. Beispielsweise kommt das Kabelelement mit der Aufnahmeseite, der Rückseite und den zwei Stirnseiten des Kabelelementkörpers in Kontakt. Somit kann eine sichere Zugentlastung bereitgestellt werden.

Ferner betrifft die Erfindung ein Elektrogerät, insbesondere ein handgehaltenes Haushaltsgerät, wie einen Stabmixer, ein Rührgerät, einen Pürierstab, oder dergleichen. Das Elektrogerät umfasst ein Kabelmontagebauteil gemäß einem der vorangegangenen Aspekte und ein durch das Kabelmontagebauteil gehaltenes Kabelelement. Bezüglich der Vorteile wird auf die vorangegangenen Ausführungen verwiesen.

Ferner betrifft die Erfindung ein Verfahren zum Anbringen eines Kabelelements an einem Elektrogerät, insbesondere einem handgehaltenen Haushaltsgerät, wie einen Stabmixer, ein Rührgerät, einen Pürierstab, oder dergleichen. Im Rahmen des Verfahrens kann ein Kabelmontagebauteil gemäß einem der vorangegangenen Aspekte zum Einsatz kommen.

Das Verfahren umfasst die Schritte gemäß Anspruch 13.

Da im Rahmen des Verfahrens ein Kabelhalter sowie ein Kabelträgerelement eingesetzt werden, ist es möglich, die Dimensionen des Kabelträgerelements oder des Kabelhalters flexibel an sich verändernde Umstände anzupassen, ohne das jeweils andere Element ändern zu müssen. Ferner ist es von Vorteil, dass der Einsatz einer Schraube zum Fixieren des Kabelelements entfällt, wobei optional zusätzlich eine Schraube eingesetzt werden kann. Somit wird der Montageaufwand reduziert.

In einer Ausführungsform des Verfahrens ist es vorgesehen, dass das Kabelelement zwischen ein Haltelement des Kabelträgerelements und die Aufnahmeseite eingeführt, insbesondere seitlich eingeschoben, wird.

Ferner ist es bevorzugt ist, dass der Kabelmantel des Kabelelements vor dem Anbringen am Kabelträgerelement abisoliert wird und das Kabelelement im zum abisolierten Bereich benachbarten Abschnitt zwischen das Halteelement und die Aufnahmeseite eingeführt wird. Somit kann das Kabelelement mittels des Kabelmantels gehalten werden.

### Kurze Beschreibung der Figuren

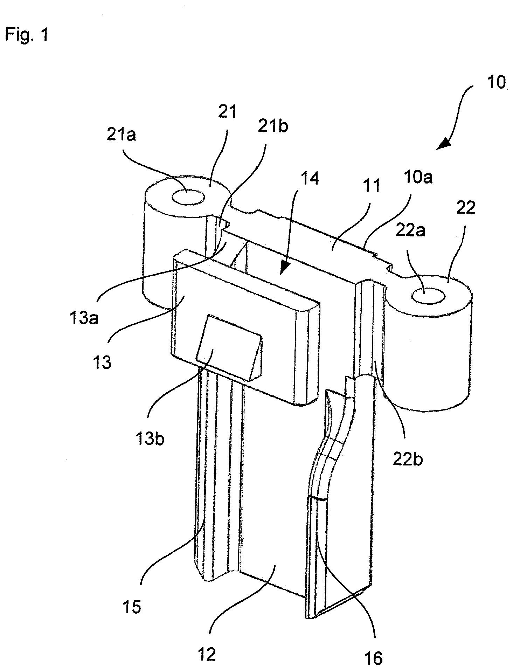

- Fig. 1: zeigt ein Kabelträgerelement eines Kabelmontagebauteils gemäß der Ausführungsform der Erfindung.

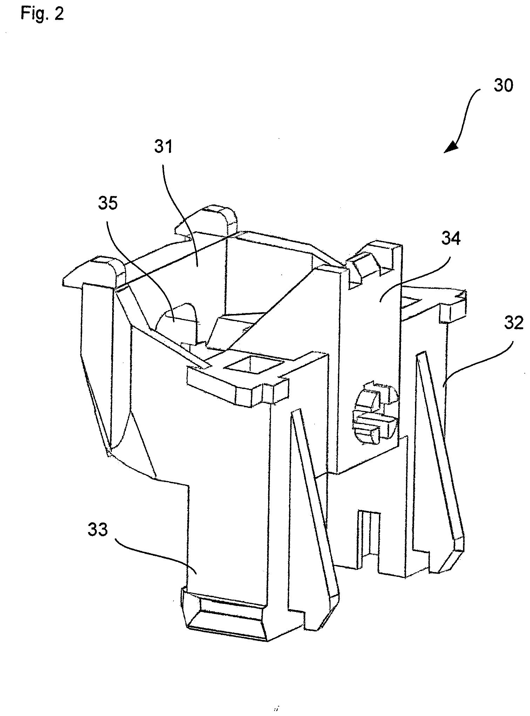

- Fig. 2: zeigt einen Kabelhalter des Kabelmontagebauteils gemäß der Ausführungsform der Erfindung.
- Fig. 3: stellt das Kabelmontagebauteil gemäß der Ausführungsform der Erfindung vor dem Zusammenfügen des Kabelträgerelements und des Kabelhalters dar.
- Fig. 4: zeigt das Kabelmontagebauteil gemäß der Ausführungsform der Erfindung, bei dem das Kabelträgerelement mit einem Kabelelement in den Kabelhalter eingefügt ist.
- Fig. 5: ist eine Querschnittsansicht des Kabelträgerelements gemäß Figur 1 mit dem vom Kabelträgerelement gehaltenen Kabelelement.

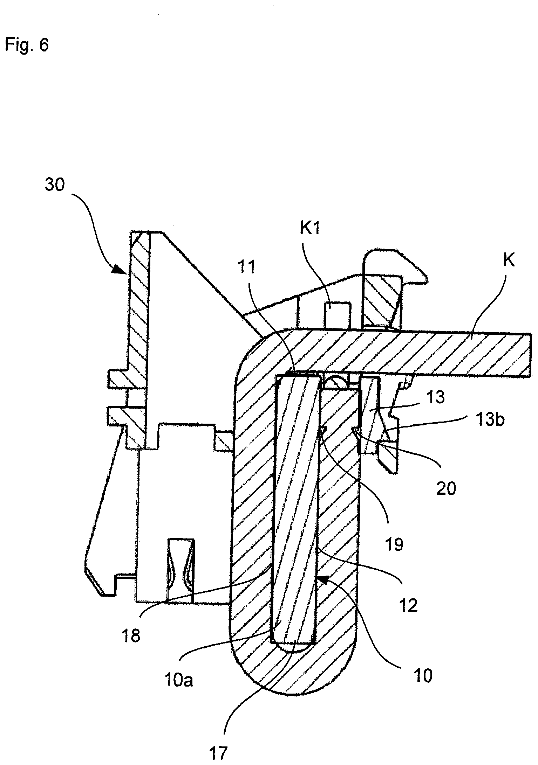

- Fig. 6: ist eine Querschnittsansicht des am Kabelhalter angebrachten Kabelträgerelements gemäß der Ausführungsform der Erfindung.
- Fig. 7: zeigt das in einem Elektrogerät aufgenommene Kabelmontagebauteil gemäß der Ausführungsform der Erfindung.

### Beschreibung der bevorzugten Ausführungsform

Anhand der beigefügten Figuren wird eine bevorzugte Ausführungsform zur Veranschaulichung der Erfindung beschrieben. Obwohl die beschriebene Ausführungsform nicht einschränkend, sondern rein beispielhaft ist, können Merkmale der Ausführungsform auch einzeln zur Spezifizierung der Erfindung herangezogen werden. Modifikationen bestimmter Merkmale der bevorzugten Ausführungsform können mit Varianten anderer Merkmale kombiniert werden, um weitere Ausführungsformen auszubilden.

Das Kabelmontagebauteil umfasst ein Kabelträgerelement 10 sowie einen Kabelhalter 30. Das Kabelträgerelement 10 sowie der Kabelhalter 30 sind bevorzugt jeweils als Spritzgussteil gefertigt. Zur Montage eines Kabelelements K an einem Elektrogerät 100, das beispielsweise als Stabmixer ausgebildet ist, kann das Kabelträgerelement 10 in den Kabelhalter 30 eingeschoben werden. Durch Kombination des Kabelträgerelements 10 mit dem Kabelhalter 30 wird eine Zugentlastung für das Kabelelement K bereitgestellt.

Das Kabelträgerelement 10 umfasst einen Kabelträgerelementkörper 10a, der eine erste Stirnseite 11 und eine in die entgegengesetzte Seite weisende zweite Stirnseite 17 aufweist. Zwischen den Stirnseiten 11, 17 erstrecken sich auf der einen Seite des Kabelträgerelementkörpers 10a eine Aufnahmeseite 12 und an der entgegengesetzten Seite eine Rückseite 18. Die Richtung zwischen den Stirnseiten 11, 17 wird nachfolgend auch als Längsrichtung des Kabelträgerelements 10 bezeichnet.

Beabstandet zur Aufnahmeseite 12 ist ein Halteelement 13 vorgesehen, das mittels eines Stützabschnitts 13a am Kabelträgerelementkörper 10a gehalten wird. Das Halteelement 13 weist eine dem Kabelträgerelementkörper 10a in etwa entsprechende Breite auf, und erstreckt sich in Längsrichtung des Kabelträgerelements 10 teilweise in etwa parallel zur Aufnahmeseite 12. In einer Draufsicht auf die Aufnahmeseite 12 wird ein Abschnitt dieser durch das Haltelement 13 verdeckt.

Zwischen der Aufnahmeseite 12 und dem Halteelement 13 wird durch die Anordnung des Halteelements 13 eine Durchschuböffnung 14 ausgebildet. Die Durchschuböffnung 14 wird durch die Aufnahmeseite 12, den Stützabschnitt 13a sowie das Haltelement 13 begrenzt.

In dem von der zweiten Stirnseite 17 ausgehenden Bereich der Aufnahmeseite 12 ist am Kabelträgerelementkörper 10a jeweils seitlich zur Aufnahmeseite 12 eine erste Rippe 15 und eine zweite Rippe 16 vorgesehen. Somit wird an der Aufnahmeseite 12 eine kanalartige Struktur bereitgestellt.

Die erste Rippe 15 geht in den Stützabschnitt 13a über. Die Vorsprungstiefe der zweiten Rippe 16 relativ zur Aufnahmeseite 12 verringert sich in Richtung des Bereichs, in dem das Halteelement 13 der Aufnahmeseite 12 gegenüberliegt. Somit ist es möglich, das Kabelelement K seitlich in die Durchschuböffnung 14 einzuschieben, ohne dass das Kabelelement K mit der zweiten Rippe 16 kollidieren würde.

An der Seite des Kabelträgerelementkörpers 10a, an der die erste Rippe 15 angeordnet ist, ist an dem Ende des Kabelträgerelementkörpers 10a, das im Bereich der ersten Stirnseite 11 liegt, ein erster Schraubdom 21 über einen ersten Verbindungssteg 21b angebracht. An der gegenüberliegenden Seite des Kabelträgerelementkörpers 10a (der Seite der zweiten Rippe 16) ist ein zweiter Schraubdom 22 über einen zweiten Verbindungssteg 22b angebracht. Der Durchmesser des ersten und zweiten Schraubdoms 21, 22 ist größer als die Dicke des jeweiligen Verbindungsstegs 21b, 22b.

Der erste Schraubdom 21 weist eine erste Bohrung 21a auf und der zweite Schraubdom 22 umfasst eine zweite Bohrung 22a. Die Bohrungen 21a, 22a erstrecken sich in Längsrichtung des Kabelträgerelements 10.

Gegenüberliegend vom Halteelement 13 ist an der Aufnahmeseite 12 ein erstes Eingriffselement 19 vorgesehen. Das erste Eingriffselement verläuft an der Aufnahmeseite 12 quer, insbesondere senkrecht, zur Längsrichtung. An der zur Aufnahmeseite 12 weisenden Seite des Halteelements 13 ist ein zweites Eingriffselement 20 vorgesehen. Das erste und das zweite Eingriffselement 19, 20 sind geeignet, mit dem Kabelmantel des Kabelelements K in Eingriff zu gelangen, insbesondere in den Kabelmantel einzudringen.

An der von der Aufnahmeseite 12 wegweisenden Seite des Halteelements 13 ist ein Einrastabschnitt 13b vorgesehen, der von der Seite des Halteelements 13 hervorsteht. Der Einrastabschnitt 13b greift am Kabelhalter 30 ein, wenn das Kabelträgerelement 10 mit dem Kabelhalter 30 verbunden wird.

Der Kabelhalter 30 umfasst einen Trägerabschnitt 31, der mit einem ersten Kupplungsabschnitt 32 und einem zweiten Kupplungsabschnitt 33 in Verbindung steht. Der erste Kupplungsabschnitt 32 und der zweite Kupplungsabschnitt 33 stellen eine Schnitt- oder Verbindungsstelle zum Elektrogerät 100 dar. Ferner werden der erste Kupplungsabschnitt 32 und der zweite Kupplungsabschnitt 33 durch einen Rückabschnitt 34 miteinander verbunden.

In dem zwischen den Abschnitten 31-34 des Kabelhalters 30 ausgebildeten Raum sind ein erster Führungsabschnitt 36 und ein zweiter Führungsabschnitt 37 vorgesehen, die derart ausgebildet sind, dass der erste Verbindungssteg 21b und der zweite Verbindungssteg 22b entsprechend in den ersten Führungsabschnitt 36 und den zweiten Führungsabschnitt 37 eindringen und bei einem Zusammenfügen des Kabelträgerelements 10 und des Kabelhalters 30 beidseitig von diesen Führungsabschnitten 36, 37 das Kabelträgerelement 10 relativ zum Kabelhalter 30 führen können.

Im Bereich des Trägerabschnitts 31 des Kabelhalters 30 ist eine Öffnung 35 vorgesehen, durch die, wie nachfolgend beschrieben, das Kabelelement K geführt werden kann. Wenn das Kabelträgerelement 10 in den Kabelhalter 30 eingeführt ist, weist das Halteelement 13 des Kabelträgerelements 10 in Richtung der Öffnung 35. Dabei kann der Einrastabschnitt 13b an einem Randbereich der Öffnung 35 einrasten und somit das Kabelträgerelement 10 relativ zum Kabelhalter 30 anordnen.

Die Montage eines Kabelelements K am Kabelmontagebauteil und somit am Elektrogerät 100 wird nachfolgend beschrieben. Die Reihenfolge der beschriebenen Schritte ist dabei beispielhaft und kann gemäß weiteren Varianten ggf. geändert werden.

In einem ersten Schritt wird der äußere Kabelmantel des Kabelelements K abisoliert, sodass die stromführenden Kabel (in den Figuren ist lediglich das Kabel K1 dargestellt) freigelegt werden. Die Litzen der Kabel können mit Crimpkontakten versehen werden.

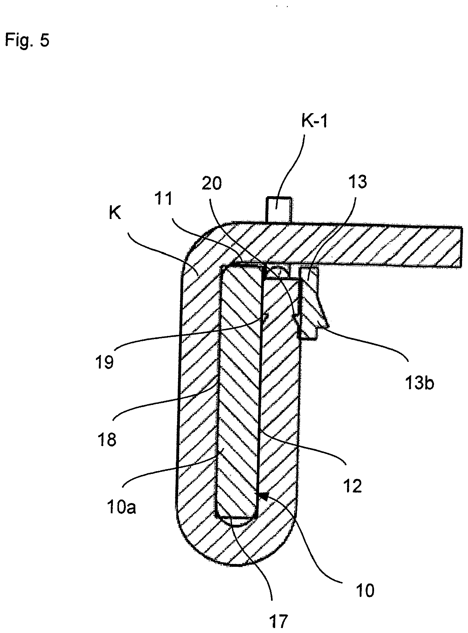

Benachbart zu dem Bereich, an dem der Kabelmantel des Kabelelements K entfernt ist, wird das Kabelelement K seitlich in die Durchschuböffnung 14 eingeführt, sodass das Kabelelement K zwischen dem Halteelement 13 und der Aufnahmeseite 12 aufgenommen ist (vgl. Fig. 5). Das Kabelelement K kann dabei bis zum Stützabschnitt 13a in die Durchschuböffnung eingeführt werden. Das Kabelelement K erstreckt sich somit entlang der Aufnahmeseite 12 des Kabelträgerelements 10 und wird durch die Rippen 15, 16 seitlich gehalten.

Nachfolgend wird das Kabelelement K um die zweite Stirnseite 17 und entlang der Rückseite 18 des Kabelträgerelements 10 geführt. Ferner wird das Kabelelement K ausgehend von der Rückseite 18 um die erste Stirnseite 11 gebogen, sodass das Kabelelement K über die erste Stirnseite 11 des Kabelträgerelements 10 verläuft. Dies ist ebenfalls in der Schnittansicht der Figur 5 anschaulich dargestellt.

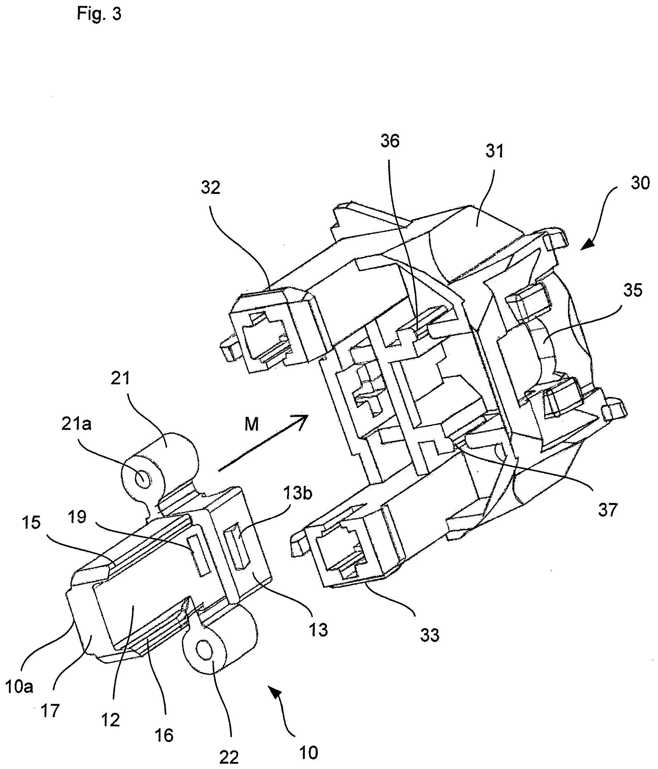

Zum Verbinden des Kabelelements K mit dem Kabelhalter 30, der ggf. bereits im Elektrogerät aufgenommen ist, wird der entlang der ersten Stirnseite 11 orientierte Abschnitt des Kabelelements K durch die Öffnung 35 des Kabelhalters 30 geführt und nachfolgend das Kabelträgerelement 10 in die Führungen 36, 37 eingeschoben (siehe Montagerichtung M in Fig. 3). Dabei werden die freigelegten Kabel K1 in der Montagerichtung M gehalten, sodass sich diese durch den Kabelhalter 30 hindurch erstrecken. Im montierten Zustand erstrecken sich die Kabel K1 im Wesentlichen senkrecht zum Öffnungsbereich der Öffnung 35.

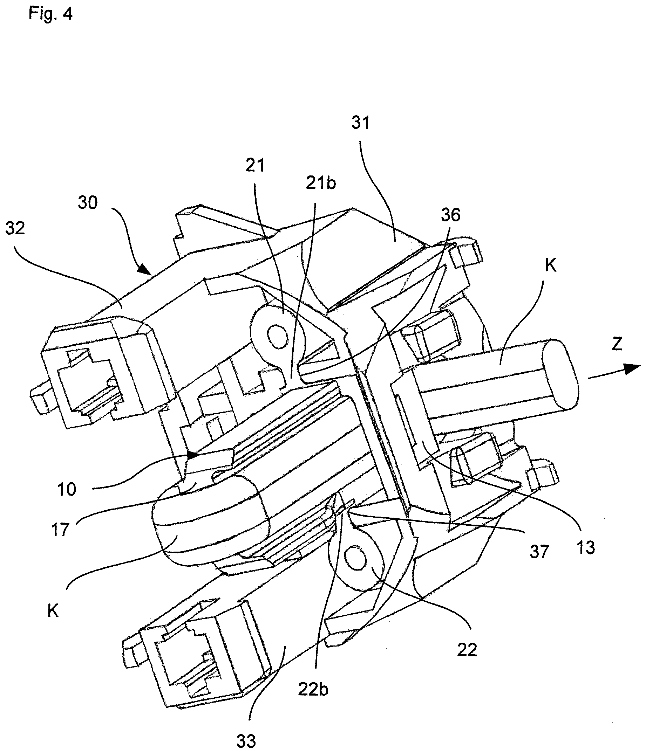

In Fig. 4 wird der montierte Zustand des Kabelmontagebauteils, welches das Kabelträgerelement 10 und den Kabelhalter 30 umfasst, zusammen mit dem Kabel K dargestellt.

Bei Bedarf können selbstschneidende Schrauben durch eine Seite des Kabelhalters 30 und durch die Bohrungen 21a, 22a des ersten Schraubdoms 21 und des zweiten Schraubdoms 22 geführt werden, um das Kabelträgerelement 10 zusätzlich am Kabelhalter 30 zu fixieren.

Nachfolgend wird ein beispielhafter Belastungsfall des Kabelelements K beschrieben.

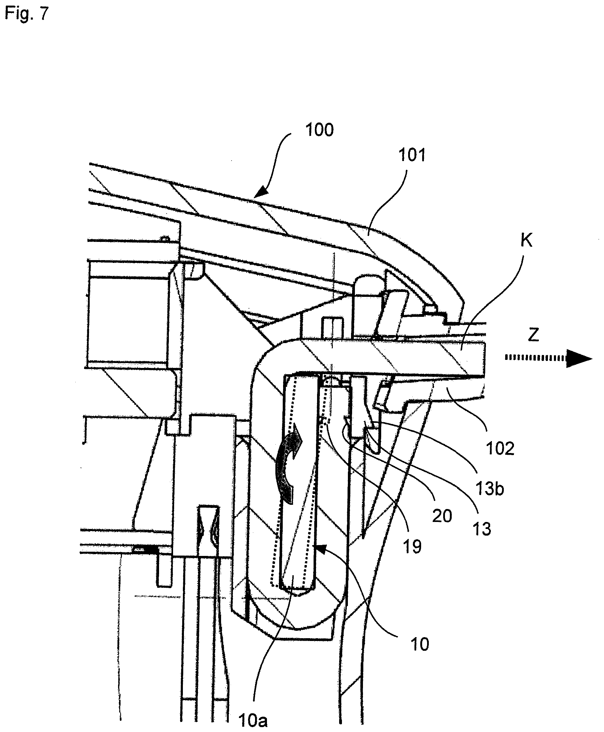

Wird am Kabelelement K eine Zugkraft aufgebracht (Zugkraftrichtung Z in Fig. 4 und 7 anschaulich dargestellt), so wird das Kabelelement K durch das erste Eingriffselement 19 und das zweite Eingriffselement 20 gehalten, wobei die Haltekraft durch die um das Kabelträgerelement 10 geschlungene Anordnung verstärkt wird. Bei Aufbringen einer größeren Zugkraft in der Zugkraftrichtung Z wird darüber hinaus der Kabelträgerelementkörper 10a deformiert, wie in Fig. 7 anschaulich dargestellt ist, sodass das erste Eingriffselement 19 noch stärker in den Kabelmantel des Kabelelements K eindringt und eine zusätzliche Fixierung des Kabelelements K am Kabelmontagebauteil K bewirkt. Das am Kabelhalter 30 anliegende Halteelement 13 stützt dabei das Kabelelement K ab.

Da die Dicke des Kabelträgerelementkörpers 10a variiert werden kann, ist es möglich, den Kabelträgerelementkörper 10a an unterschiedlich dimensionierte Kabelelemente anzupassen. Auf diese Weise kann der gleiche Kabelhalter 30 für unterschiedlich dimensionierte Kabelelemente verwendet werden. Lediglich das vergleichsweise einfach ausgestaltete Kabelträgerelement 10 muss für eine andere Charge ersetzt und entsprechend neu dimensioniert werden. Ferner ist es möglich, innerhalb des Produktionsprozesses den Kabelhalter 30 im Elektrogerät 100 bereits vorzumontieren und erst in einem letzten Verfahrensschritt die Kabelmontage vorzunehmen.

Obwohl die vorliegende Erfindung im Rahmen eines Stabmixers beschrieben wurde, ist ersichtlich, dass das Elektrogerät 100 auch ein Handrührgerät oder ein Pürierstab sein kann. Auch kann die Erfindung bei nicht handgehaltenen Haushaltsgeräten zum Einsatz kommen.

## Patentansprüche

1. Kabelmontagebauteil für ein Elektrogerät (100), insbesondere ein handgehaltenes Haushaltsgerät, aufweisend:
ein Kabelträgerelement (10) mit einem Kabelträgerelementkörper (10a), der eine Aufnahmeseite (12) aufweist, wobei das Kabelträgerelement (10) eingerichtet ist, ein Kabelelement (K) an der Aufnahmeseite (12) zu halten,
einen am Elektrogerät (100) befestigbaren Kabelhalter (30), wobei der Kabelhalter (30) eine Führung (36, 37) für das Kabelträgerelement (10) aufweist,
wobei das Kabelträgerelement (10) eingerichtet ist, mit zumindest teilweise um den Kabelträgerelementkörper (10a) geschlungenem Kabelelement (K) entlang der Führung (36, 37) des Kabelhalters (30) bewegt zu werden,
wobei das Kabelträgerelement (10) an der Aufnahmeseite (12) ein erstes Eingriffselement (19) zum Eingriff an einem Kabelmantel eines Kabelelements (K) vorgesehen ist,
**dadurch gekennzeichnet, dass**
das Kabelträgerelementkörper (10a) bei Aufbringen einer Zugbelastung derart deformierbar ist, dass das erste Eingriffselement (19) in den Kabelmantel des Kabelelements (K) eingedrückt wird.

2. Kabelmontagebauteil gemäß Anspruch 1, **dadurch gekennzeichnet, dass** das Kabelträgerelement (10) und/oder der Kabelhalter (30) als Spritzgussteil gefertigt ist/sind.

3. Kabelmontagebauteil gemäß einem der vorangegangenen Ansprüche, **dadurch gekennzeichnet, dass** das Kabelträgerelement (10) ein Halteelement (13) aufweist, das zur Aufnahmeseite (12) des Kabelträgerelements (10) derart beabstandet angeordnet ist, dass ein Kabelelement (K) zwischen der Aufnahmeseite (12) und dem Halteelement (13) aufgenommen werden kann.

4. Kabelmontagebauteil gemäß Anspruch 3, **dadurch gekennzeichnet, dass** das Halteelement (13) an der zur Aufnahmeseite (12) weisenden Seite ein zweites Eingriffselement (20) zum Eingriff an einem Kabelmantel eines Kabelelements (K) aufweist.

5. Kabelmontagebauteil gemäß Anspruch 3 oder 4, **dadurch gekennzeichnet, dass** das Halteelement (13) einseitig mittels eines Stützabschnitts (13a) mit dem Kabelträgerelementkörper (10a) verbunden ist.

6. Kabelmontagebauteil gemäß einem der vorangegangenen Ansprüche, **dadurch gekennzeichnet, dass** am Kabelträgerelementkörper (10a) ein erster Verbindungssteg (21b) und ein zweiter Verbindungssteg (22b) vorgesehen sind, die in entgegengesetzten Richtungen vom Kabelträgerelementkörper (10a) hervorstehen, wobei bevorzugt ist, dass die Verbindungsstege (21b, 22b) jeweils mit der Führung des Kabelhalters (30) in Kontakt bringbar sind.

7. Kabelmontagebauteil gemäß einem der vorangegangenen Ansprüche, **dadurch gekennzeichnet, dass** das Kabelträgerelement (10) zumindest einen Schraubdom (21, 22) aufweist, wobei bevorzugt ist, dass das Kabelträgerelement (10) einen ersten Schraubdom (21) und einen zweiten Schraubdom (22) aufweist, die an entgegengesetzten Seiten des Kabelträgerelementkörpers (10a) angeordnet sind.

8. Kabelmontagebauteil gemäß Anspruch 7, **dadurch gekennzeichnet, dass** der Schraubdom eine Bohrung aufweist, wobei bevorzugt der erste Schraubdom (21) eine erste Bohrung (21a) und der zweite Schraubdom (22) eine zweite Bohrung aufweist.

9. Kabelmontagebauteil gemäß einem der vorangegangenen Ansprüche, **dadurch gekennzeichnet, dass** der Kabelhalter (30) als Führung einen ersten Führungsabschnitt (36) und einen zweiten Führungsabschnitt (37) aufweist, entlang derer das Kabelträgerelement (10) bewegbar, insbesondere in den Kabelhalter (30) einschiebbar, ist.

10. Kabelmontagebauteil gemäß einem der vorangegangenen Ansprüche, **dadurch gekennzeichnet, dass** die Führung des Kabelhalters (30) zwischen einem Trägerabschnitt (31) und einem Rückabschnitt (34) des Kabelhalters (30) vorgesehen ist, so dass das Kabelträgerelement (10) zum Anbringen des Kabelelements (K) zumindest teilweise in den Kabelhalter (30) einschiebbar ist.

11. Kabelmontagebauteil gemäß einem der vorangegangenen Ansprüche mit einem Kabelelement (K), wobei das Kabelelement (K) um den Kabelträgerelementkörper (10a) geschlungen ist.

12. Elektrogerät (100), insbesondere ein handgehaltenes Haushaltsgerät, wie einen Stabmixer, ein Rührgerät, einen Pürierstab, oder dergleichen, mit einem Kabelmontagebauteil gemäß einem der vorangegangenen Ansprüche und einem durch das Kabelmontagebauteil gehaltenen Kabelelement (K).

13. Verfahren zum Anbringen eines Kabelelements (K) an einem Elektrogerät, insbesondere einem handgehaltenen Haushaltsgerät, wie einen Stabmixer, ein Rührgerät, einen Pürierstab, oder dergleichen, insbesondere unter Verwendung eines Kabelmontagebauteils gemäß einem der Ansprüche 1-12, umfassend die Schritte:
Anbringen eines Kabelelements (K) an einer Aufnahmeseite (12) eines Kabelträgerelementkörpers (10a) eines Kabelträgerelements (10), wobei das Kabelelement (K) zumindest teilweise um den Kabelträgerelementkörper (10a) des Kabelträgerelements (10) geschlungen ist,
Bewegen des Kabelträgerelements (10) mit dem Kabelelement (K) entlang einer Führung eines Kabelhalters (30),
wobei das Kabelträgerelement (10) an der Aufnahmeseite (12) ein erstes Eingriffselement (19) zum Eingriff an einem Kabelmantel eines Kabelelements (K) vorgesehen ist, **dadurch gekennzeichnet, dass**
das Kabelträgerelementkörper (10a) bei Aufbringen einer Zugbelastung derart deformierbar ist, dass das erste Eingriffselement (19) in einen Kabelmantel des Kabelelements (K) eingedrückt wird.

14. Verfahren gemäß Anspruch 13, **dadurch gekennzeichnet, dass** das Kabelelement (K) zwischen ein Haltelement (13) des Kabelträgerelements (10) und die Aufnahmeseite (12) eingeführt, insbesondere seitlich eingeschoben, wird, wobei bevorzugt ist, dass der Kabelmantel des Kabelelements (K) vor dem Anbringen am Kabelträgerelement (10) abisoliert wird und das Kabelelement (K) im zum abisolierten Bereich benachbarten Abschnitt zwischen das Halteelement (13) und die Aufnahmeseite (12) eingeführt wird.

## Claims

1. Cable mounting component for an electrical appliance (100), in particular a hand-held household appliance, having:
a cable mounting element (10) with a cable mounting element body (10a) which has a receiving side (12), wherein the cable mounting element (10) is configured to hold a cable element (K) on the receiving side (12), a cable holder (30) which can be attached to the electrical appliance (100), wherein the cable holder (30) has a guide (36, 37) for the cable mounting element (10), wherein the cable mounting element (10) is configured to be moved along the guide (36, 37) of the cable holder (30) with the cable element (K) at least partially looped around the cable mounting element body (10a), wherein the cable mounting element (10) is provided on the receiving side (12) with a first engaging element (19) for engaging in a cable sheath of a cable element (K), **characterised in that**, when a tensile load is applied, the cable mounting element body (10a) is deformable in such a way that the first engaging element (19) is pressed into the cable sheath of the cable element (K).

2. Cable mounting component according to claim 1, **characterised in that** the cable mounting element (10) and/or the cable holder (30) is/are manufactured as an injection moulded part.

3. Cable mounting component according to one of the preceding claims, **characterised in that** the cable mounting element (10) has a retaining element (13) which is arranged at a distance from the receiving side (12) of the cable mounting element (10) in such a way that a cable element (K) can be received between the receiving side (12) and the retaining element (13).

4. Cable mounting component according to claim 3, **characterised in that** the retaining element (13) has a second engaging element (20) for engaging in a cable sheath of a cable element (K) on the side facing the receiving side (12).

5. Cable mounting component according to claim 3 or 4, **characterised in that** the retaining element (13) is connected to the cable mounting element body (10a) on one side by means of a supporting section (13a).

6. Cable mounting component according to one of the preceding claims, **characterised in that** a first connecting rib (21b) and a second connecting rib (22b) are provided on the cable mounting element body (10a) which project from the cable mounting element body (10a) in opposite directions, wherein it is preferable if the connecting ribs (21b, 22b) can each be brought into contact with the guide of the cable holder (30).

7. Cable mounting component according to one of the preceding claims, **characterised in that** the cable mounting element (10) has at least one screw boss (21, 22), wherein it is preferable if the cable mounting element (10) has a first screw boss (21) and a second screw boss (22) which are arranged on opposite sides of the cable mounting element body (10a).

8. Cable mounting component according to claim 7, **characterised in that** the screw boss has a bore, wherein preferably the first screw boss (21) has a first bore (21a) and the second screw boss (22) has a second bore.

9. Cable mounting component according to one of the preceding claims, **characterised in that** the cable holder (30) has as a guide a first guide section (36) and a second guide section (37) along which the cable mounting element (10) can be moved, in particular inserted into the cable holder (30).

10. Cable mounting component according to one of the preceding claims, **characterised in that** the guide of the cable holder (30) is provided between a carrier section (31) and a back section (34) of the cable holder (30), so that the cable mounting element (10) can be inserted at least partially into the cable holder (30) in order to attach the cable element (K).

11. Cable mounting component according to one of the preceding claims with a cable element (K), wherein the cable element (K) is looped around the cable mounting element body (10a).

12. Electrical appliance (100), in particular a hand-held household appliance such as a hand blender, a mixer, an immersion blender or the like, with a cable mounting component according to one of the preceding claims and a cable element (K) held by the cable mounting component.

13. Method for attaching a cable element (K) to an electrical appliance, in particular a hand-held household appliance, such as a hand blender, a mixer, an immersion blender or the like, in particular using a cable mounting component according to one of the claims 1-12, comprising the steps:
attaching a cable element (K) to a receiving side (12) of a cable mounting element body (10a) of a cable mounting element (10), wherein the cable element (K) is at least partially looped around the cable mounting element body (10a) of the cable mounting element (10), moving the cable mounting element (10) with the cable element (K) along a guide of a cable holder (30), wherein the cable mounting element (10) is provided on the receiving side (12) with a first engaging element (19) for engaging in a cable sheath of a cable element (K), **characterised in that**, when a tensile load is applied, the cable mounting element body (10a) is deformable in such a way that the first engaging element (19) is pressed into a cable sheath of the cable element (K).

14. Method according to claim 13, **characterised in that** the cable element (K) is introduced, in particular inserted laterally, between a retaining element (13) of the cable mounting element (10) and the receiving side (12), wherein it is preferable if the cable sheath of the cable element (K) is stripped before being attached to the cable mounting element (10) and the cable element (K) is introduced in the section between the retaining element (13) and the receiving side (12) adjacent to the stripped region.

## Revendications

1. Composant de montage de câble pour un appareil électrique (100), en particulier un appareil électroménager à main, comprenant :
un élément de support de câble (10) pourvu d'un corps d'élément de support de câble (10a) qui présente un côté de réception (12), dans lequel l'élément de support de câble (10) étant configuré pour maintenir un élément de câble (K) sur le côté de réception (12),
un porte-câble (30) pouvant être fixé à l'appareil électrique (100), dans lequel le porte-câble (30) comportant un guide (36, 37) pour l'élément de support de câble (10),
dans lequel l'élément de support de câble (10) est configuré pour être déplacé le long du guide (36, 37) du porte-câble (30) avec l'élément de câble (K) au moins partiellement enroulé autour du corps d'élément de support de câble (10a),
dans lequel l'élément de support de câble (10) est pourvu sur le côté de réception (12) d'un premier élément de mise en prise (19) pour une mise en prise sur une gaine de câble d'un élément de câble (K),
**caractérisé en ce que** le corps d'élément de support de câble (10a) est déformable lorsqu'une charge de traction est appliquée de telle manière que le premier élément de mise en prise (19) est pressé dans la gaine de câble de l'élément de câble (K).

2. Composant de montage de câble selon la revendication 1, **caractérisé en ce que** l'élément de support de câble (10) et/ou le porte-câble (30) est/sont fabriqué(s) sous la forme d'une pièce moulée par injection.

3. Composant de montage de câble selon l'une quelconque des revendications précédentes, **caractérisé en ce que** l'élément de support de câble (10) présente un élément de retenue (13) qui est agencé à distance du côté de réception (12) de l'élément de support de câble (10) de telle manière qu'un élément de câble (K) peut être reçu entre le côté de réception (12) et l'élément de retenue (13).

4. Composant de montage de câble selon la revendication 3, **caractérisé en ce que** l'élément de retenue (13) présente un second élément de mise en prise (20) faisant face au côté de réception (12) pour une mise en prise au niveau d'une gaine de câble d'un élément de câble (K).

5. Composant de montage de câble selon la revendication 3 ou 4, **caractérisé en ce que** l'élément de retenue (13) est relié d'un côté au corps d'élément de support de câble (10a) au moyen d'une section de support (13a).

6. Composant de montage de câble selon l'une quelconque des revendications précédentes, **caractérisé en ce que** sur le corps de l'élément de support de câble (10a) sont prévues une première nervure de liaison (21b) et une seconde nervure de liaison (22b) qui dépassent dans des directions opposées à partir du corps d'élément de support de câble (10a), dans lequel de préférence les nervures de liaison (21b, 22b) peuvent chacune être amenées en contact avec le guide du porte-câble (30).

7. Composant de montage de câble selon quelconque l'une des revendications précédentes, **caractérisé en ce que** l'élément de support de câble (10) présente au moins un bossage à vis (21, 22), dans lequel de préférence, l'élément de support de câble (10) présente un premier bossage à vis (21) et un second bossage à vis (22), qui sont agencés sur des côtés opposés du corps d'élément de support de câble (10a).

8. Composant de montage de câble selon la revendication 7, **caractérisé en ce que** le bossage à vis présente un alésage, dans lequel de préférence le premier bossage à vis (21) présente de préférence un premier alésage (21a) et le second bossage à vis (22) présente un second alésage.

9. Composant de montage de câble selon l'une quelconque des revendications précédentes, **caractérisé en ce que** le porte-câble (30) présente une première section de guide (36) et une seconde section de guide (37) en tant que guide, le long desquelles l'élément de support de câble (10) peut être déplacé, en particulier inséré dans le porte-câble (30).

10. Composant de montage de câble selon l'une quelconque des revendications précédentes, **caractérisé en ce que** le guide du porte-câble (30) est prévu entre une section de support (31) et une section arrière (34) du porte-câble (30), de sorte que le l'élément de support de câble (10), pour une fixation de l'élément de câble (K), peut être inséré au moins partiellement dans le porte-câble (30).

11. Composant de montage de câble selon l'une quelconque des revendications précédentes, comportant un élément de câble (K), dans lequel l'élément de câble (K) est enroulé autour du corps d'élément de support de câble (10a).

12. Appareil électrique (100), en particulier appareil électroménager à main, tel qu'un mixeur plongeant, un mélangeur, un presse-purée ou analogue, avec un élément de montage de câble selon l'une des revendications précédentes et un élément de câble (K) retenu par le composant de montage du câble.

13. Procédé de fixation d'un élément de câble (K) sur un appareil électrique, notamment un appareil électroménager à main, tel qu'un mixeur plongeant, un mélangeur, un presse-purée ou analogue, utilisant notamment un élément de montage de câble selon l'une quelconque des revendications 1-12, comprenant les étapes consistant à :
fixer un élément de câble (K) sur un côté de réception (12) d'un corps d'élément de support de câble (10a) d'un élément de support de câble (10), dans lequel l'élément de câble (K) est au moins partiellement enroulé autour du corps d'élément de porte-câble (10a) de l'élément de support de câble (10), déplacer l'élément de support de câble (10) avec l'élément de câble (K) le long d'un guide d'un porte-câble (30),
dans lequel l'élément de support de câble (10) présente un premier élément de mise en prise (19) au niveau du côté de réception (12) pour une mise en prise sur une gaine de câble d'un élément de câble (K), **caractérisé en ce que** le corps d'élément de support de câble (10a) est déformable lorsque une charge de traction est appliquée de telle manière que le premier élément de mise en prise (19) est pressé dans une gaine de câble de l'élément de câble (K).

14. Procédé selon la revendication 13, **caractérisé en ce que** l'élément de câble (K) est inséré entre un élément de maintien (13) de l'élément de support de câble (10) et le côté de réception (12), en particulier enfoncé latéralement, dans lequel de préférence la gaine de câble de l'élément de câble (K) est dénudée avant une fixation à l'élément de support de câble (10) et l'élément de câble (K) est inséré entre l'élément de support (13) et le côté de réception (12) dans une section adjacente à l'étendue dénudée.
